# EUROPEAN PATENT APPLICATION

(11) **EP 4 550 694 A1**
(43) Date of publication of application: **07.05.2025**
(21) Application number: 23386132.7
(22) Date of filing: 11.12.2023
(51) Int. Cl.: H04B 13/02, G08C 23/04

(54) **REAL-TIME DATA COLLECTION AND COMMUNICATION SYSTEM FOR UNDERWATER ENVIRONMENT**

(30) Priority: 03.11.2023 GR 20230100916
(71) Applicant: University of Thessaly, 38221 Volos (GR)
(72) Inventor: Iakovidis, Dimitrios, 35131 Lamia (GR); Chandolias, Konstantinos, 41223 Larissa (GR); Sandalidis, Harilaos, 55534 Pilaia (GR); Stasinakis, Argyris, 11467 Nea Erythraia (GR); Strimpakos, Nikolaos, 35100 Lamia (GR)
(74) Representative: Panagiotidou, Effimia

(57) **Abstract**

The invention includes a low power method and system, capable of collecting data through sensors (1) mounted on a device carrying subjects which are capable of moving in an underwater environment, and transmitting them to an aquatic environment by means of a transmitter with LED (6) by modulating its emitted light. The emitted signal from the LED is received by a photodiode (7) placed within the water channel and demodulated to retrieve the data collected by the sensors. This data is transmitted, de-noise and displayed on a computer (9) where they can be monitored in real time. This system is suitable for a variety of applications, such as monitoring biometric parameters of bathers. It can also be applied to underwater robotic systems to collect and monitor data related to the aquatic environment.p

## Description

The present invention relates to a system for collecting, transmitting, receiving, and monitoring data from a subject with the ability to move in an underwater environment using a real-time, wireless, optical telecommunication system.

According to the literature, there are several devices that have the ability to collect and transmit data from bathers, such as -for example- biometric data of bathers, including heart rate and body temperature. In the cases of these systems of the prior art, the subjects are considered to be the bathers who carry a transmitter device, through which they collect and transmit data to the receiver of the system. These devices are mainly used to monitor swimmers, but while they collect the data in real time, they do not transmit it in real time, but store it for future processing. Other instances of devices in the current state of the art are capable of transmitting real-time data, but only provided that the system is out of the water (e.g. worn on the head). A further technical problem encountered in the systems of the current art is that the electromagnetic spectrum used to transmit information in these systems is the radio frequency spectrum, which has limited capabilities in terms of the volume of information it can transmit, and can also be affected by interference, which reduces the performance and reliability of the system.

Therefore, there is no system in current state of the art that solves the technical problem of collecting and communicating data of subjects with the ability to move in real time, in an underwater environment, which is capable of transmitting a sufficient amount of data for modern and "smart" applications of this type.

By way of illustration, some of the closest solutions proposed by the prior art to solve these technical problems are listed below.

Document US 2011/0241887 discloses a device capable of collecting and monitoring swimmers' physiological parameters, such as heart rate, and emitting distress signals through the optical spectrum, only when their physiological parameters indicate that the swimmers are in danger, such as when they are drowning or in a suffocating state. Therefore, in this system, there is no possibility for continuous transmission of physiological parameters to allow for their processing and analysis by remote receivers of these parameters for real-time health assessment, e.g., for monitoring cardiac arrhythmias.

In document US 2018/0040223 A1, a system is disclosed for remotely monitoring individuals, such as bathers or children who may be inactive or disappear, via cameras and microphones that collect visual information from the visible and/or ultraviolet electromagnetic spectrum and sounds respectively. The cameras and microphones shall be installed close to the area under surveillance, outside the aquatic environment. This system has the capability to identify dangerous situations for the monitored persons, such as drowning in water, and to transmit the collected visual and audio data via radio frequencies to a remote receiver in real time. However, it is not clear whether this system can be used in an underwater environment.

Finally, devices on the market, such as the "cosinuss°" family of devices (Cosinuss GmbH, Germany) have the ability to collect biometric data from the users' auditory resource and transmit them in real time to a remote receiver via radio frequencies. However, it is not clear whether these devices can be used in an underwater environment.

The current state-of-the-art systems mentioned above either cannot be used in cases where the subject must be completely submerged in water, or cannot be used in cases where a continuous real-time data stream is required in an underwater environment, and therefore do not solve the technical problem identified.

In a brief disclosure of the present invention, the invention is a system, method and apparatus that is capable of collecting, transmitting, receiving and monitoring in real time, via sensors, data relating to subjects that are capable of movement in an underwater environment, using a wireless optical telecommunication system. This information shall be transmitted underwater using a wireless optical link to an underwater transmitter. Specifically, the underwater subject has a Light Emitting Diode (LED) transmitter which transmits the information collected by sensors by modulating the light it emits and then this information is received by a photodiode which is also located in the underwater environment. This information is then transmitted by the photodiode system to a remote receiver which is connected to a data processing and analysis system, such as a computer or cloud computing platform. Through this system, it is possible to monitor the parameters in real time, process them and analyze them in order to identify characteristics that signal different states of the subject, including situations requiring immediate intervention.

Typical examples of application and use of the system are the following: a) the monitoring of biometric parameters, e.g., heart rate, body temperature, blood oxygen level; (b) monitoring of parameters related to the condition and composition of the underwater channel, such as salinity, concentration of microorganisms and elements, when the sensors are mounted on low-powered underwater robotic systems, such as Autonomous Underwater Vehicles (AUVs); c) monitoring the movement of fish in fish farms and their environment; d) monitoring the status of underwater robotic systems in general, such as their energy levels, movement and integrity.

The real-time data transmission capability, provided by the system of the present invention, makes it possible to continuously monitor the subjects carrying the transmitter of the system, resulting in both the identification of situations requiring immediate action and the identification of patterns that can be otherwise exploited.

The device implementing the present inventive concept is low power, portable and suitable for living organisms and for applications requiring low power consumption.

Examples: (a) in the case of transmission of data concerning the monitoring of fish, the system can be used to identify patterns of behaviour, indicating, for example, that the fish is in a reproductive phase; (b) in the case of biometric data from human swimmers, the system may be used to identify patterns spanning relatively long intervals of heart rate, monitoring indicating the presence of arrhythmias, or shorter intervals, such as to prevent swimmers from fainting due to a drop in blood oxygen level; (c) in the case of transmission of parameters relating to the status of the submarine channel, it is possible to intervene immediately in the event of a sudden increase in a harmful element. At the same time, the use of the optical spectrum allows the transmission of information at a high rate (-Gbps), which can even support the transmission of high resolution images or videos. In addition, the use of the optical spectrum does not require a license to transmit a signal, as is the case with radio frequencies, and is environmentally friendly and completely safe for living organisms that may be present in the aquatic environment.

The two Drawings accompanying the invention illustrate, in brief, the following:
Fig. 1 shows the information flow diagram and the basic functions of the system.
Fig. 2 shows a diagram of the parts of the device and how they are connected to each other.

The example embodiment of the inventive concept described below concerns the transmission of biometric data of people in a swimming pool. However, the inventive idea is applicable in exactly the same way in the case where the subjects under observation are other living organisms such as fish, or even devices such as underwater robotic systems.

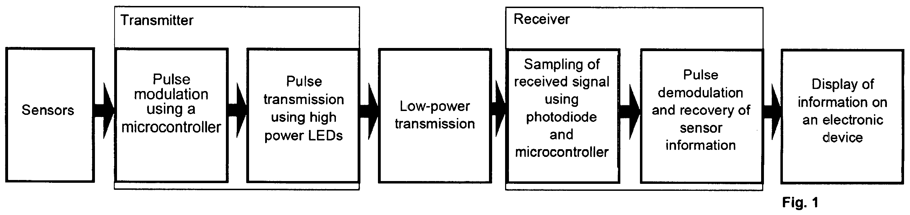

As illustrated in Fig. 1, the method of the present invention includes the following steps, all of which are performed in real time:
1^{st} STEP: Collection of measurement data of parameters characterizing the subjects and/or the aquatic environment.
2^{nd} STEP: Modulation of the signal carrying the information collected over time.
3^{rd} STEP: Converting the modulated signal to a low power optical signal.
4^{th} STEP: Low power optical signal transmission in the aquatic environment with a high brightness light source.
5^{th} STEP: Receiving the optical signal from the receiver and
converting it into an electrical signal.
6^{th} STEP: Sampling, de-noising and demodulating the electrical signal obtained and recovering from it the original information collected in STEP 1.
7^{th} STEP: Real-time display of information on an electronic device such as a computer, mobile phone, etc.

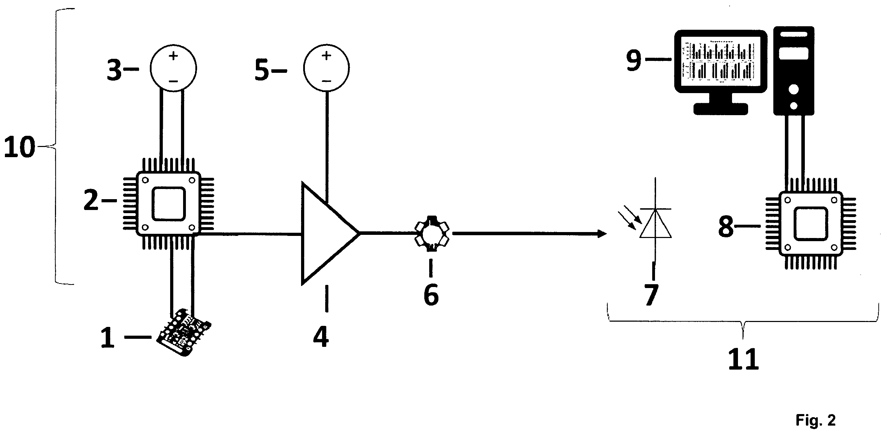

The device implementing the above method is a low-power, portable device. It consists of a transmitter (10) and a receiver (11), and includes the following:
As illustrated in Fig. 2, the transmitter (10) comprises one or more sensors (1); a microcontroller (2); a power supply battery (3); one or more photocells (6); a driving circuit (4) for the photocell and a voltage source (5). The receiver (11) comprises one or more photodiodes (7) reversely polarized, and a microcontroller (8) connected to a computer (9). Instead of a computer, the invention works in exactly the same way if connected to another "smart" device, such as, for example, a "smartphone" and in general to any computer unit.

Specifically, sensors (1) are used to collect data from the system users (Fig. 2). The number of sensors used can be increased depending on the amount of data required in a given situation, for example, if heart and body temperature data collection is required, two sensors will be used.

Depending on the application, the type of sensors can also be varied, for example, to use a sensor that has the ability to measure biometric data (heart rate, blood oxygen level (SpO₂) and body temperature), data on the state of the channel, the movement of the subject. The dimensions of the sensor do not affect the functionality of the invention. The invention is waterproof and can be easily placed on users.

Initially, the standard system in which the present method was applied, the sensor (1) is connected to a microcontroller (2) which is powered by a battery (3) (Fig. 2).

To enable data transmission, the Pulse Width Modulation (PWM) technique was applied because the width of a pulse remains unchanged during its propagation through a wireless optical system. More specifically, the system generates groups of pulses of constant amplitude. The number of pulses contained in each group corresponds to the number of different parameters collected by the sensor, and additionally includes a test (pilot) pulse, which is used as a guide in order to separate the different groups of pulses. For example, if the sensor measures blood oxygen level, body temperature and heart rate, then each group of pulses will consist of four pulses, three corresponding to each of the measured parameters and an additional one corresponding to the pilot pulse. The amplitude of each pulse will be modulated according to the value of the corresponding parameter. More specifically, the value of the pulse width and the value of the parameter are linked by a mathematical equation, e.g. a linear equation. The amplitude of the test pulse is sufficiently smaller than the amplitude that the other pulses will be able to obtain, in order for the test pulse to stand out.

Alternatively, other modulation techniques can be used, such as Pulse Frequency Modulation (PFM), in which the value of each parameter will be proportional to the frequency of a group of pulses that have the same width and amplitude.

In the example embodiment of the inventive concept described herein, the pulsed signal is transmitted by means of at least one LED following a modulation methodology, such as, but not limited to, On-Off Keying (OOK) modulation. In order to generate a sufficiently large electric current in the LED which will generate brightness capable of travelling the distance to the receiver, a driving circuit for the LED (4) was used (Fig. 2).

Four rechargeable lithium (Li-Ion) batteries were used as the voltage source (5) in the example. This type of battery has the ability to supply the system with a constant current with an autonomy of several hours. The LED (6) which was used is a high brightness LED in order to provide the required optical power to transmit the signal at the desired distance.

The optical receiver has a photodiode (7) polarized inversely. This reverse-polarization connection is suitable for the case of fast circuit response to support high data rate communication.

The sampling and reconstruction of the incoming signal is carried out with the help of a microcontroller (8). The sampling frequency is adjusted to be sufficiently higher than the pulse frequency to avoid distortion or loss of information. The sampled signal, accompanied by the corresponding sample reception times, is then transmitted to a computer (9) where the final information is displayed.

### Example of experimental application - Results:

By way of illustration, the accuracy of the present invention is indicated for the case of monitoring data of a subject in a swimming pool.

The sensor was programmed to generate test signals that could relate to monitored parameters such as the oxygen level and heart rate of a swimmer. In this way it was possible to compare and detect errors with respect to the corresponding results displayed on the system (computer) output.

The swimmer was moved in a random manner in the pool and the test was carried out several times for different cases of external visual noise (external lighting) as this factor greatly affects the performance and reliability of an optical system. More specifically, these cases were: a) without external optical noise; b) with constant high external optical noise; and c) with variable external optical noise. The results in Table 1 show the percentage of pulses that the receiver failed to receive and the percentage of pulses in the receiver that demodulated correctly and transmitted the correct value of the received information.

**Table 1.**

| | | Percentage of correctly demodulated pulses | | |
|---|---|---|---|---|
| Noise level | Lost percentage of pulses | Oxygen level | Heartbeat | Total |
| No noise | 0% | 100% | 85% | 92% |
| High noise | 12% | 91% | 75% | 84% |
| Variable noise | 4% | 95% | 82% | 90% |

As demonstrated in Table 1, the percentage of pulses lost has little effect on the efficiency of the system as the measurement acquisition frequency is quite high compared to the measurement (pulse) loss frequency.

The efficiency of the system can be configured according to the needs of the application by changing the values of some system parameters such as their power supply, changing the de-noising algorithm, etc.

The above system can be applied to a large number of applications involving the monitoring of subjects in an underwater environment, some of which are listed below. In the field of health and sports, in cases where physicians or physiotherapists need to monitor the biometric parameters of athletes or patients performing exercises in an aquatic environment, such as the environment of a swimming pool, or people undergoing treatment in thermal baths (spas). Real-time monitoring of biometric parameters can increase the efficiency and safety of exercises and prevent dangerous incidents in special categories of patients, such as cardiac patients.

In addition, businesses and hotels that have swimming pools or thermal springs in order to monitor the biometric parameters of bathers in order to prevent dangerous situations, while it will be possible to monitor water quality regarding the concentration of various elements (e.g. chlorine) and the concentration of harmful microorganisms. This system can also be applied in fish farms where continuous monitoring of the condition and composition of the aquatic environment, which must be in a certain state, and of the fish, is required.

## Claims

1. A method of collecting and communicating information in an underwater environment, **characterized in that** the information is sent by a low-power portable system and the information is monitored in real time and includes the following steps:
1^{st} STEP: collection of measurement data of parameters characterizing the subjects and/or the aquatic environment,
2^{nd} STEP: modulation of the signal carrying the information collected over time,
3^{rd} STEP: conversion of the modulated signal into a low-power optical signal,
4^{th} STEP: transmission of the optical signal to the aquatic environment at low power with a high brightness light source,
5^{th} STEP: receiving the optical signal from the receiver and
converting it into an electrical signal,
6^{th} STEP: sampling, reconstruction, i.e. de-noising and
demodulation of the electrical signal received and recovery from it of the original information collected in STEP 1,
7^{th} STEP: display of the information on an electronic device, such as a computer, mobile phone, etc., in real time.

2. Method according to claim 1, **characterized in that** for the implementation of STEP 2, the system generates groups of pulses of constant amplitude,
where
the number of pulses contained in each group corresponds to the number of different parameters collected during the execution of Step 1 and further includes a pilot pulse, which is used as a guide in order to separate the different groups of pulses
and where
the width of each pulse will be modulated according to the value of the corresponding parameter, such that the value of the amplitude of the pulse and the value of the parameter are related by a mathematical equation, whilst the amplitude of the pilot pulse being sufficiently smaller than the amplitude that the other pulses will be able to obtain in order to distinguish the pilot pulse.

3. A method according to claim 2, **characterized in that** the signal with the pulses is transmitted by means of at least one light source, following a modulation methodology.

4. A method according to claim 3, **characterized in that** the sampling frequency is adjusted to be sufficiently higher than the frequency of the pulses so that there is no distortion or loss of information.

5. A method according to claim 1, **characterized in that,** when modulating the signal with the information collected performed in Step 2, modulation techniques are used, including pulse amplitude and frequency modulation techniques.

6. Apparatus implementing the method of any of claims 1-5, **characterized in that** it is low power, and comprising
- a portable transmitter (10) comprising at least one sensor (1), a microcontroller (2), a power supply battery (3), at least one light source (6), a driving circuit (4) for the light source and a voltage source (5);
and
- an optical receiver (11) comprising at least one photodiode (7), which is inversely polarized, and a microcontroller (8), which is connected to an electronic computer unit (9).

7. Apparatus according to claim 6, **characterized in that** it is waterproof.
